# EUROPÄISCHE PATENTSCHRIFT

(11) **EP 0 838 304 B1**
(45) Veröffentlichungstag und Bekanntmachung des Hinweises auf die Patenterteilung: **23.04.2003**
(21) Anmeldenummer: 97122729.3
(22) Anmeldetag: 14.11.1994
(51) Int. Cl.: B23Q 5/32, B23Q 17/22, G05B 19/416

(54) **Mobiles Präzisions-Bohrgerät**
Mobile precision boring tool
Outillage mobile d'alésage de précision

(30) Priorität: 23.11.1993 DE 4339770
(43) Veröffentlichungstag der Anmeldung: 29.04.1998
(62) Teilanmeldung aus: 95900733.7
(73) Patentinhaber: JOHANNES LÜBBERING AG, 6301 Zug (CH)
(72) Erfinder: Lübbering, Johannes, 33442 Herzebrock (DE)
(74) Vertreter: Elbertzhagen, Otto, Dipl.-Ing.

(56) Entgegenhaltungen:
- GB-A- 2 218 268
- US-A- 4 688 970
- US-A- 5 123 789

## Beschreibung

Die Erfindung bezieht sich auf ein mobiles Bohrgerät der im Oberbegriff des Patentanspruchs 1 näher bezeichneten Art.

Ein solches Bohrgerät wird bei allen Präzisions-Bohrarbeiten eingesetzt, bei denen die Werkstücke eine solche Größe haben, daß sie nicht auf stationären Bohrmaschinen bearbeitet werden können. Ein bevorzugter Anwendungsbereich dieser Bohrgeräte findet sich in der Luftfahrtindustrie, um beispielsweise im Flugzeugbau diejenigen Bohrungen zu bearbeiten, die für die Verbindung zwischen einem Flugzeugrumpf und den Tragflächen vorzusehen sind. Das jeweilige Bohrgerät wird entweder an einer Hilfsvorrichtung fest angebracht oder im variablen Einsatz in Verriegelungsbuchsen, in Schablonen oder in ähnliche Aufnahmevorrichtungen eingesetzt. Eine besonders exakte Bearbeitungsgenauigkeit derartiger Bohrgeräte wird beim Aufreiben voreingebrachter Bohrungen verlangt, wofür konische Reibewerkzeuge mit einem konischen Ansatz verwendet werden.

Ein Bohrgerät der genannten Art ist aus der US-A-4,688,970 bekannt. Dieses Bohrgerät hat einen Antriebsmotor zum Drehen der Werkzeugspindel und zusätzlich einen Vorschubantrieb, der den Vorschub der Werkzeugspindel zum Werkstück hin und von dort zurück besorgt. An der Werkzeugspindel sitzen Sensoren, um zu überwachen, daß das Bohrgerät über den Arbeitsweg hinweg bestimmte Arbeitsdaten einhält, insbesondere mit dem Werkzeug die vorbestimmte Bohrtiefe erreicht wird, wonach dann wieder das Werkzeug aus dem Bohrloch zurückgezogen wird. Hilfsmittel zur Erfassung der Werkstückoberseite, um von da ab die Eindringtiefe des Werkzeugs in das Werkstück vorgeben und den Vorschubweg sowie die jeweilige Vorschubposition verfolgen zu können, sind bei dem bekannten Gerät nicht vorhanden. Gleiches gilt für das aus der DE 40 19 515 A1 bekannte Bohrgerät, das ebenfalls an ein Werkstück ansetzbar ist. Dort handelt es sich jedoch um eine insgesamt gegenüber einer Vorschubeinheit verschiebbare Bohreinheit, insoweit hat man es hier mit einem gattungsfremden Bohrgerät zu tun.

Aus dem Dokument US-A-5,123,789 ist ein maschinelles Bohrgerät bekannt, welches einen über einem Werkstücktisch angeordneten Schlitten mit einer Bohrspindel sowie mit einem zugehörigen Dreh- und Vorschubantrieb aufweist. Damit werden Präzisionsbohrungen an mehrschichtigen Platinen für gedruckte Schaltungen vorgenommen. Über einen Rechner werden der Vorschubantrieb und der Drehantrieb für die Bohrspindel in Abhängigkeit voneinander gesteuert, und es ist ein Meßsystem vorhanden, um den Vorschubweg zu erfassen. Dieses Meßsystem weist einen Tiefensensor mit einer axial verschieblichen Tastvorrichtung auf, die achsparallel mit dem Werkzeug ist und zur Ermittlung eines Referenzsignals für den Abstand des Werkzeuges vom Randbereich der zu bearbeitenden Bohrung auf das Werkstück aufsetzbar ist. Über den Vorschubantrieb wird das gesamte Bohrgerät gegenüber dem zu bearbeitenden, auf dem Werkstücktisch angeordneten Werkstück verschoben, eine solche Anordnung ist für ein mobiles Bohrgerät zum Festlegen an einer Bohrstelle von großen Werkstücke nicht geeignet.

Der Erfindung liegt die Aufgabe zugrunde, ein Präzisions-Bohrgerät der gattungsbildenden Art zu schaffen, bei dem der Arbeitsweg sowie die jeweilige Position des Werkzeugs beim Bearbeitungsvorgang exakt bestimmt werden kann.

Diese Aufgabe wird bei einem mobilen Bohrgerät der gattungsgemäßen Art durch die Merkmale des Patentanspruchs 1 gelöst.

Für die Erfindung ist die exakte Bestimmung der augenblicklichen Position des Werkzeugs wesentlich, wozu das Meßsystem zur Erfassung des Vorschubweges dient. In Abhängigkeit von einem Referenzpunkt wird die jeweilige Lage der Werkzeugspindel in axialer Richtung bestimmt, wofür eine sogenannte absolute Wegmessung vorgesehen ist. Zu diesem Wegmeßsystem gehört die Tastnase, welche auf die Oberfläche des zu bearbeitenden Werkstücks in unmittelbarer Nähe des Werkzeugeingriffs aufgesetzt wird und einen Referenzpunkt festlegt. Ferner kann man in den Rechner des Gerätes die Daten des jeweils eingesetzten Werkzeuges eingeben und so den jeweils in Betracht kommenden Arbeitshub festlegen, um beispielsweise zum Ende einer Feinbohrung hin mit einem geringeren Vorschub exakt fahren zu können.

Das Meßsystem für den Vorschubweg ermöglicht es weiterhin, bis zum Eingriff des Werkzeugs mit der höchstmöglichen Vorschubgeschwindigkeit des separat ausgebildeten Vorschubantriebs zu fahren, was die gesamte Bearbeitungsdauer erheblich verkürzt, so daß das Bearbeitungsspiel nur noch ein Drittel der Zeit herkömmlicher Maschinen beträgt.

Das Meßsystem zur Bestimmung des Vorschubweges erlaubt es ferner, die Verschleißgrenze des Werkzeugs festzustellen, indem zum Beispiel im Rechner Vergleichswerte abgespeichert werden und die Abweichung von diesen Referenzwerten ermittelt wird. Ferner schafft die Erfassung des Vorschub- bzw. Arbeitsweges des Werkzeugs die Möglichkeit, auch während des Bearbeitungsvorganges das Werkzeug vorübergehend zurückzuziehen, damit beispielsweise problematische Späne aus dem Bohrloch herausgebracht werden können.

Der Rechner des Bohrgerätes dient zur Auswertung aller Daten und zur Steuerung der Funktionen und Arbeitsabläufe. Ebenso ist an dem Bohrgerät ein Speicherchip vorgesehen, der die individuellen Daten der Maschine und des eingesetzten Werkzeugs trägt, die bei Überholung oder bei einem Neueinsatz des Gerätes aufgeprägt werden. Jeweils zu Beginn eines Einsatzes werden diese Daten abgefragt, an den Rechner gegeben und darin ausgewertet, damit der Arbeitsweg bestimmt werden kann. Auf diese Weise können auch die Wartungsdaten des Bohrgerätes und des Werkzeuges vorgegeben werden, damit die Verschleißgrenze nicht überschritten wird. Über eine Datenschnittstelle kann das Bohrgerät mit einem weiteren Bohrgerät und/oder einem zentralen Rechner vernetzt werden, um eine zentrale Überwachung und Auswertung der Arbeitsdaten der Maschinen und Werkzeuge zu ermöglichen.

Die Erfindung wird nachfolgend anhand der Zeichnung an einem Ausführungsbeispiel noch näher erläutert, dabei zeigen:
- Fig. 1: eine schematische Ansicht eines mobilen Bohrgerätes teilweise im Längsschnitt,
- Fig. 2: eine vergrößerte Wiedergabe des vorderen Bereichs des Vorgerätes gem. Fig. 1 und
- Fig. 3: eine vergrößerte Wiedergabe des rückwärtigen Bereichs des Bohrgerätes gem. Fig. 1.

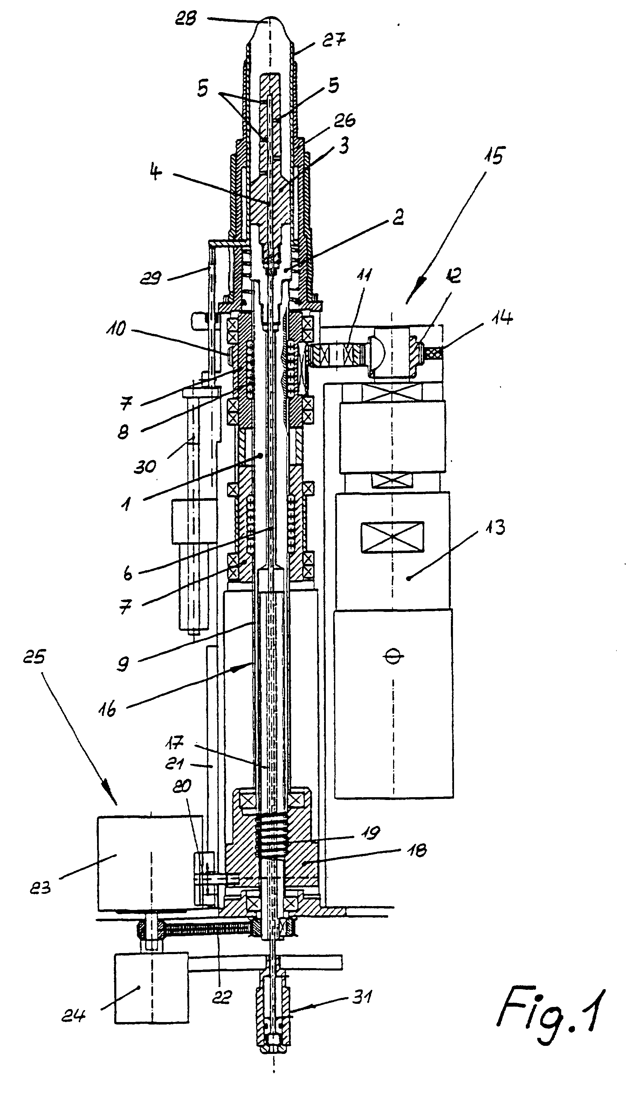

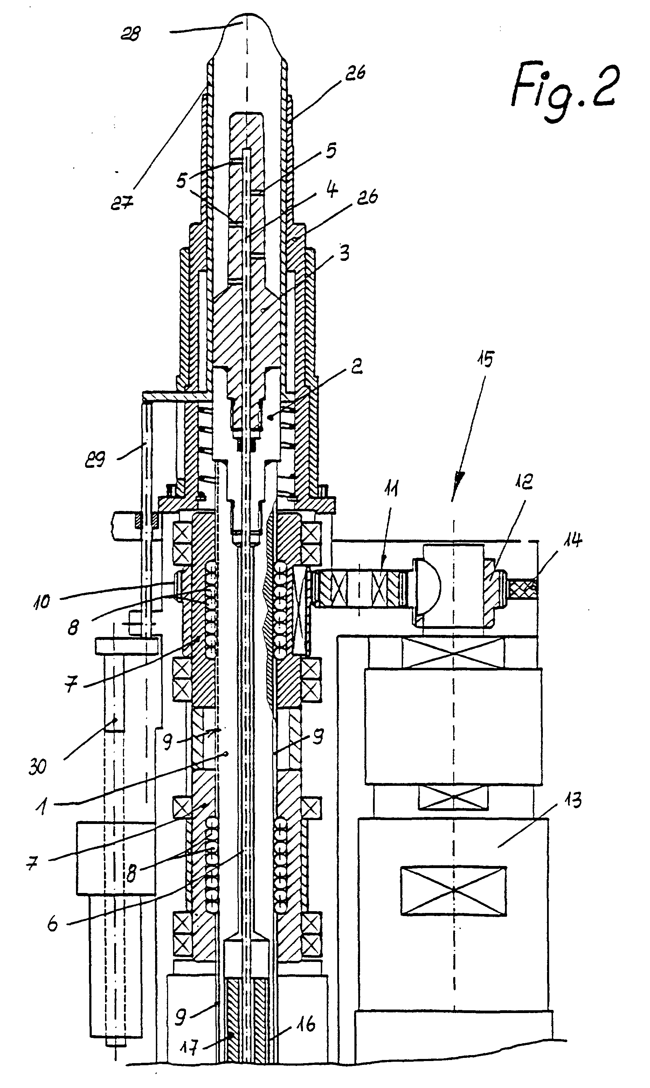

Im einzelnen erkennt man in den Figuren 1 und 2 eine in einem nicht näher bezeichneten Maschinengestell gelagerte Werkzeugspindel 1, die an ihrem vorderen Ende eine Werkzeugaufnahme 2 hat. Darin ist ein Bohr- oder Reibwerkzeug 3 eingesetzt, welches einen Axialkanal 4 für die Zuführung eines Schmiermittels zu den Werkzeugschneiden aufweist. An den Axialkanal 4 schließen deshalb Querbohrungen 5 an, die über die gesamte Länge des Schneidbereichs des Werkzeugs 3 angeordnet sind. Die Zuleitung des Schmiermittels zu dem Werkzeug 3 hin erfolgt durch die Werkzeugspindel 1 hindurch, die dazu einen Axialkanal 6 hat, der sich in axialer Richtung weiter bis zum hinteren Ende der Maschine erstreckt.

Um den Vorschub des Werkzeugs 3 beim Bearbeitungsvorgang zu besorgen, ist die Werkzeugspindel 1 in ihrer Achsrichtung verschieblich gelagert. Dazu dienen zwei im Maschinengestell drehbar gelagerte Buchsen 7, die im Innern achsparallele Längsnuten haben, in denen Kugeln 8 angeordnet sind. Diese Kugeln 8 greifen in achsparallele Längsnuten 9 der Werkzeugspindel 1 ein, so daß die Werkzeugspindel 1 sich mit den drehbar gelagerten Buchsen 7 drehen und unabhängig davon gegenüber den Buchsen 7 in axialer Richtung verschoben werden kann. Um möglichst ein radiales Spiel der Werkzeugspindel 1 zu vermeiden, sind die Buchsen 7 mit dem größtmöglichen Abstand zueinander angeordnet. So liegt in der zurückgezogenen Endlage der Werkzeugspindel 1 die Werkzeugaufnahme 2 unmittelbar am Austrittsende der vorderen Buchse 7 bezogen auf die Vorschubrichtung. Gleichermaßen liegt das rückwärtige Ende der Werkzeugspindel 1 in der vorgeschobenen Endlage unmittelbar am Eintrittsende der hinteren Buchse 7.

Die Werkzeugspindel 1 wird durch einen Drehantrieb 15 in Rotation versetzt, zu dem ein Zahnkranz 10 gehört, der auf der äußeren Umfangsseite der vorderen Buchse 7 sitzt. Über ein Zahnradgetriebe 11 steht dieser Zahnkranz 10 auf der Budhse 7 mit einem Abtriebsrad 12 eines Motors 13 in Verbindung, der zur Werkzeugspindel 1 achsparallel angeordnet ist. Bei dem Motor 13 kann es sich um einen Druckluftmotor handeln, der bei kleiner Baugröße eine relativ hohe Leistung hat.

Der Motor 13 wird im Lastfall mit einer vorgegebenen Drehzahl gefahren, damit auch die Werkzeugspindel 1 und somit das Werkzeug 3 auf einer bestimmten Drehzahl gehalten werden. Der Motor 13 kann somit im günstigsten Leistungsbereich betrieben werden, wobei er selbst nicht nachgesteuert oder -geregelt werden soll. Vielmehr wird lediglich die Drehzahl des Drehantriebs 15 erfaßt, dazu sitzt an einer geeigneten Stelle im Drehantrieb 15 ein Drehzahlmesser 14. Das drehzahlabhängige Signal des Drehzahlmessers 14 wird in einen Rechner gegeben, der danach die Vorschubgeschwindigkeit für die Werkzeugspindel 1 bestimmt. Solange die Drehzahl des Drehantriebs 15 beispielsweise beim Beginn eines Bearbeitungsspiels noch nicht bis auf die optimale Lastdrehzahl abgefallen ist, kann mit einem erhöhten Vorschub gefahren werden, der mechanisch von der Drehzahl des Drehantriebs 15 völlig entkoppelt ist. Anstelle eines Druckluftmotors kann für den Motor 13 auch ein Elektromotor eingesetzt werden, der zusätzlich die Möglichkeit bietet, mit einem vorgegebenen Lastmoment betrieben zu werden, das über die Stromaufnahme des Elektromotors ermittelt werden kann.

Der Rechner steuert einen Vorschubantrieb 25, und zwar derart, daß bei den Leerwegen, über die hinweg das Werkzeug 3 nicht im Materialeingriff steht, mit maximaler Vorschubgeschwindigkeit gefahren wird, was sowohl für den Beginn eines Arbeitsspiels wie auch für den Rückzug des Werkzeugs gilt. Im übrigen wird der Vorschubantrieb 25 so geregelt, daß optimale Schnittbedingungen unter Berücksichtigung der günstigsten Lastdrehzahl des Motors 13 eingehalten werden. Hierbei wird zusätzlich noch zwischen einer normalen Bearbeitung und einer Feinbearbeitung unterschieden, wobei im letzteren Falle mit hoher Drehzahl und geringem Vorschub gearbeitet wird.

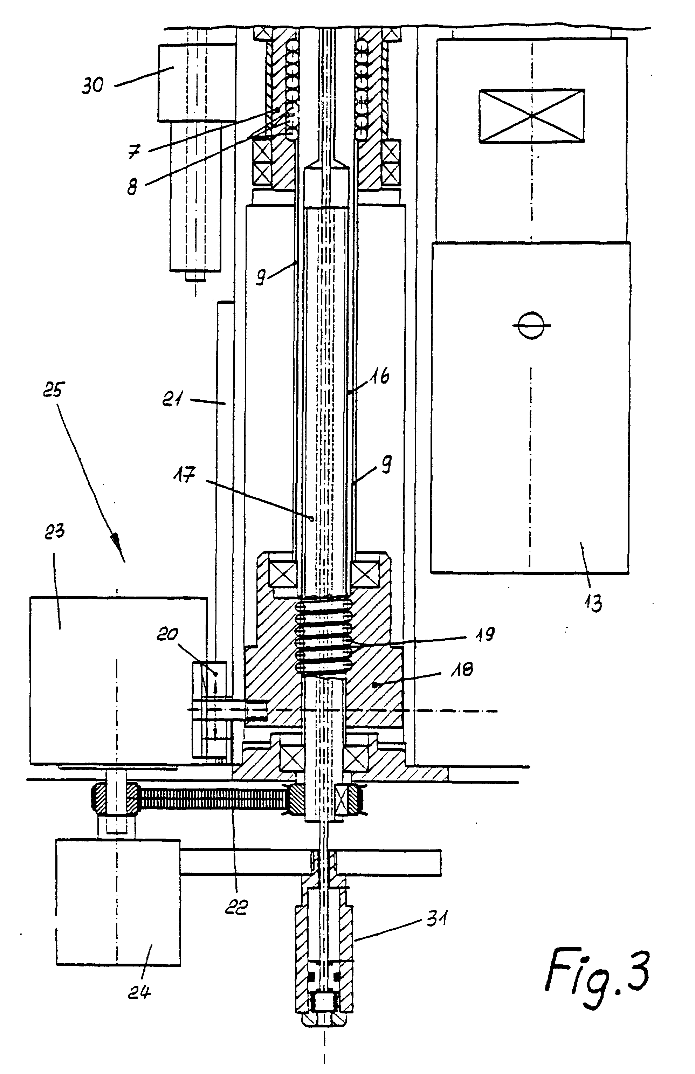

Wie die Figuren 1 und 3 veranschaulichen, gehört zu dem Vorschubantrieb 25 eine drehbar gelagerte Gewindespindel 17, die in axialer Richtung nicht verschiebbar ist. Die Gewindespindel 17 greift in einen hohlen Abschnitt 16 im rückwärtigen Endbereich der Werkzeugspindel 1 ein. Auf der Gewindespindel 17 ist eine Mutter 18 derart angeordnet, daß sie in Drehrichtung festliegt, wozu ein Schlitten 20 dient, der auf einer achsparallelen Führung 21 des Maschinengestells geführt ist. Diese Führung 21 erstreckt sich über einen axialen Verschiebebereich der Mutter 18, der sich mit dem gesamten Vorschubweg der Werkzeugspindel 1 deckt. Die Werkzeugspindel 1 ist mit ihrem rückwärtigen Ende des hohlen Abschnitts 16 in der Mutter 18 drehbar gelagert, jedoch in Achsrichtung mit der verschieblichen Mutter 18 fest verbunden. Mittels Umlaufkugeln 19, die sowohl in das Gewinde der Gewindespindel 17 als auch in ein Gegengewinde der Mutter 18 eingreifen, wird bei Drehung der Gewindespindel 17 die axiale Verschiebung der Mutter 18 und damit der Vorschub der Werkzeugspindel 1 bewirkt. Der Rotationsantrieb der Gewindespindel 17 erfolgt über ein Riemengetriebe 22 durch einen Vorschubmotor 23, bei dem es sich um einen Schrittmotor handeln kann.

Der Riementrieb 22 treibt ferner ein Meßsystem 24 an, das vornehmlich aus einem inkrementalen Drehgeber besteht. Über die von dem Drehgeber gelieferten Signale kann exakt der Vorschubweg der Werkzeugspindel 1 ermittelt werden, womit eine absolute Wegmessung möglich ist. Das Meßsystem 24 ist entsprechend mit dem Rechner der Maschine verbunden, um für die vorausbestimmbaren Leerwege sowie die Wege der Bearbeitung und der Feinbearbeitung über den Vorschubantrieb 25 den Vorschub des Werkzeugs 3 zu steuern und gegebenenfalls in Abhängigkeit von der über den Drehzahlmesser 14 erfaßbaren Drehzahl der Werkzeugspindel 1 nachzuregeln.

Wie Fig. 1 weiter zeigt weist das Meßsystem 24 zur Erfassung des Vorschubweges einen Tiefensensor 30 auf, der über ein Gestänge 29 mit einem Tastrohr 27 verbunden ist, welches in einer das Werkzeug 3 in seiner zurückgezogenen Endlage umgebenden Hülse 26 angeordnet ist. Auch das Tastrohr 27 umgibt das Werkzeug 3 und hat eine Tastnase 28, die auf das Material des jeweiligen Werkstücks im Randbereich der zu bearbeitenden Bohrung aufsetzbar ist. Da der Abstand zwischen dem Werkzeug und dem Tastende der Tastnase 28 in deren voll ausgefahrener Position bekannt ist, kann über den Eindrückweg der aufsitzenden Tastnase 28 bei angesetztem Bohrgerät über den Tastsensor 30 ein Referenzsignal für den Werkzeugabstand in der Ausgangslage ermittelt werden. Insbesondere ist damit die Festlegung eines Nullpunktes für die Steuerung oder Regelung des Rechners im Zusammenspiel mit dem Meßsystem 24 möglich.

## Patentansprüche

1. Mobiles Bohrgerät zum Festlegen an einer Bohrstelle von großen Werkstücken für Präzisions-Bohrarbeiten mittels eines Werkzeugs (3) mit einer in ihrer Achsrichtung im Maschinengestell verschieblich gelagerten Werkzeugspindel (1) mit einer entsprechenden Werkzeugaufnahme und mit einem Drehantrieb (15) sowie einem separaten Vorschubantrieb (25) zur axialen Verschiebung der Werkzeugspindel (1),
**dadurch gekennzeichnet,**
**daß** der Vorschubantrieb (25) in Abhängigkeit von dem axialen Vorschubweg mittels eines Rechners derart geregelt ist, daß die Werkzeugspindel (1) über den Drehantrieb (15) mit vorgegebener Lastdrehzahl oder vorgegebenem Lastdrehmoment angetrieben ist, daß ein Meßsystem (24) zur Erfassung des Vorschubweges vorhanden ist, welches einen Tiefensensor (30) aufweist, der mit einer axial verschieblichen Tastnase (28) verbunden ist, die achsparallel zum Werkzeug (3) angeordnet und auf das Werkstück zur Ermittlung eines Referenzsignals für den Abstand des Werkzeuges vom Randbereich der zu bearbeitenden Bohrung am Werkstück aufsetzbar ist, und daß der Vorschubantrieb (25) eine drehbar gelagerte Gewindespindel (17) und eine in Drehrichtung feste, in Axialrichtung verschiebliche Mutter (18) auf der Gewindespindel (17) aufweist und diese Mutter (18) mit der Werkzeugspindel (1) in Drehrichtung lose sowie in Axialrichtung fest verbunden ist, wobei die Gewindespindel (17) des Vorschubantriebs (25) mit einem inkrementalen Drehgeber (24) als Meßsystem zur Erfassung des Vorschubweges verbunden ist.

## Claims

1. Mobile boring unit adapted to be placed on a drilling point of large work pieces for precision boring work by means of a tool (3) with a tool spindle (1) displaceably arranged in its axial direction in the machine frame with a corresponding tool mount and with a rotation drive (15) as well as a separate feed drive (25) for the axial displacement of the tool spindle (1),
**characterised in that**
the feed drive (25) is regulated depending upon the axial feed path by means of a computer in such a way that the tool spindle (1) is driven by means of the rotating drive (15) with pre-specified load speed or pre-specified load torque, that a measurement system (24) for recording the feed path is present which has a depth sensor (30) which is connected with a displaceable sensory nose (28) which is arranged axially parallel to the tool (3) and can be placed on the work piece for recording a reference signal for the distance of the tool from the edge area of the bore on the work piece to be processed, and that the feed drive (25) has a thread spindle (17) arranged in a rotatable way and a nut (18) on the thread spindle displaceable in an axial direction and fixed in a rotation direction and this nut (18) is connected with the tool spindle (1) loosely in the rotation direction and fixed in the axial direction wherein the thread spindle (17) of the feed drive (25) is connected with an incremental rotation indicator (24) as a measurement system for recording the feed path.

## Revendications

1. Outillage mobile d'alésage pour fixation sur un point d'alésage de grandes pièces à usiner, aux fins de travaux d'alésage de précision, à l'aide d'un outil (3), avec une broche (1) montée déplaçable dans le sens de son axe, dans un bâti de machine, avec un porte-outil adéquat et avec un entraînement assurant la rotation (15) ainsi qu'un entraînement séparé (25) assurant l'avance de la broche (1) dans les sens axial,
**caractérisé en ce que**
l'entraînement d'avance (25) est réglé, en dépendance de la course axiale, à l'aide d'un calculateur de sorte que la broche (1) se trouve entraînée par l'intermédiaire de l'entraînement en rotation (15) à une vitesse de rotation en charge prédéterminée ou un couple de rotation prédéterminé, qu'un système de mesure (24) est prévu pour la saisie du parcours d'avance, ledit système de mesure présentant un capteur de profondeur (30) qui est relié à un nez palpeur (28) qui, déplaçable dans le sens axial, est disposé parallèlement à l'axe de l'outil (3) et peut être mis en place sur la pièce à usiner pour détecter un signal de référence concernant la distance entre ledit outil et la zone marginale de l'alésage à traiter sur la pièce à usiner,
et que l'entraînement d'avance (25) présente une broche filetée (17), montée rotative, et un écrou (18) qui, fixe dans le sens de rotation, peut être déplacé sur la broche (17), dans le sens axial, et est relié à la broche (1), lâchement dans le sens de rotation et fixe dans le sens axial, la broche filetée (17) de l'entraînement d'avance (25) étant reliée à un dispositif incrémentiel (24) en tant que système de mesure pour la saisie du parcours d'avance.
